# DEMANDE DE BREVET EUROPEEN

(11) **EP 0 694 705 A1**
(43) Date de publication de la demande: **31.01.1996**
(21) Numéro de dépôt: 95401721.6
(22) Date de dépôt: 19.07.1995
(51) Int. Cl.: F16D 1/072, F16D 3/76

(54) **Dispositif de liaison d'un arbre notamment de direction d'un véhicule automobile et d'une fourche de cardan**

(30) Priorité: 28.07.1994 FR 9409379
(71) Demandeur: ECIA - EQUIPEMENTS ET COMPOSANTS POUR L'INDUSTRIE AUTOMOBILE, F-25400 Audincourt (FR)
(72) Inventeur: Barneoud, Jean-Marc, F-25350 Mandeure (FR); Perrot, Gérard, Mathay, F-25700 Valentigney (FR); Courvoisier, Patrick, F-25600 Vieux-Charmont (FR)
(74) Mandataire: Habasque, Etienne Joel Jean-François

(57) **Abrégé**

Ce dispositif dans lequel la fourche comporte un corps (3) à l'une des extrémités duquel sont formées des branches (4,5) et comportant un organe de filtrage de vibrations (7) en matière élastiquement déformable, disposé entre le corps (3) et l'arbre (1) et une clef de sécurité (8) de limitation du déplacement angulaire du corps et de l'arbre, fixée à l'un des éléments, arbre ou corps, par emmanchement et comprenant au moins une partie en saillie radiale adaptée pour coopérer avec des surfaces de butée complémentaires de l'autre des éléments, corps ou arbre, est caractérisé en ce que l'élément correspondant et la clef (8) sont réalisés en des matériaux présentant des duretés différentes, en ce que l'organe, clef (8) ou élément correspondant, réalisé dans le matériau le plus dur comporte des parties en saillie et en creux d'immobilisation par rapport à l'autre organe, et en ce que la clef (8) est fixée à l'élément correspondant par emmanchement à force.

## Description

La présente invention concerne un dispositif de liaison notamment d'un arbre de direction d'un véhicule automobile et d'une fourche de cardan.

On connaît déjà dans l'état de la technique, un certain nombre de dispositifs de liaison de ce type, dans lesquels la fourche de cardan comporte un corps tubulaire à l'une des extrémités duquel sont formées des branches de réception de moyens d'articulation à la cardan et qui comportent un organe de filtrage par exemple en matière élastiquement déformable, monté sous contrainte entre le corps et une portion correspondante de l'arbre.

Ces dispositifs comportent également des moyens de limitation du déplacement angulaire du corps et de l'arbre l'un par rapport à l'autre, qui sont communément appelés clefs de sécurité.

Cette clef de sécurité est fixée par exemple sur l'arbre et comprend au moins une partie en saillie radiale vers l'extérieur adaptée pour coopérer avec des surfaces de butée complémentaires du corps de la fourche de cardan.

De tels dispositifs de liaison sont décrits par exemple dans le document US-A-3 878 695.

Dans ce document, la clef de limitation du déplacement angulaire du corps et de l'arbre l'un par rapport à l'autre, se présente sous la forme d'une rondelle fixée à l'extrémité correspondante de l'arbre, cette rondelle comprenant sur sa surface externe des parties en saillie radiale diamétralement opposées et adaptées pour coopérer avec des surfaces de butée complémentaires du corps, pour limiter le déplacement angulaire de l'arbre et du corps l'un par rapport à l'autre, et sur sa surface interne, des cannelures adaptées pour coopérer avec des cannelures complémentaires de l'arbre pour assurer sa fixation sur l'arbre.

De plus, et pour éviter tout dégagement de la rondelle de l'arbre, le maintien en position de celle-ci est assuré par exemple par sertissage de celle-ci sur l'arbre.

Cependant, on conçoit que ces dispositifs présentent un certain nombre d'inconvénients, notamment au niveau de leur coût de fabrication, car la fixation de la clef de sécurité sur l'arbre nécessite plusieurs étapes parmi lesquelles la formation de cannelures sur l'arbre, la formation de cannelures sur la clef de sécurité, l'emmanchement de cette clef sur l'arbre et enfin le blocage en position de celle-ci.

Le but de l'invention est donc de résoudre ces problèmes en proposant un dispositif de liaison qui soit simple et fiable.

A cet effet, l'invention a pour objet un dispositif de liaison d'un arbre notamment de direction d'un véhicule automobile et d'une fourche de cardan comportant un corps tubulaire à l'une des extrémités duquel sont formées des branches de réception de moyens d'articulation à la cardan, le dispositif comportant un organe de filtrage de vibrations en matière élastiquement déformable, disposé entre le corps et une portion correspondante de l'arbre et une clef de sécurité de limitation du déplacement angulaire du corps et de l'arbre l'un par rapport à l'autre, fixée à l'un des éléments, arbre ou corps, par emmanchement et comprenant au moins une partie en saillie radiale adaptée pour coopérer avec des surfaces de butée complémentaires de l'autre des éléments, corps ou arbre, caractérisé en ce que l'élément correspondant et la clef de sécurité sont réalisés en des matériaux présentant des duretés différentes, en ce que l'organe, clef ou élément correspondant, réalisé dans le matériau le plus dur comporte des parties en saillie et en creux d'immobilisation par rapport à l'autre organe, et en ce que la clef est fixée à l'élément correspondant par emmanchement à force.

Avantageusement, les partie en saillie et en creux d'immobilisation sont formées par des cannelures.

L'invention sera mieux comprise à la lecture de la description qui va suivre, donnée uniquement à titre d'exemple et faite en se référant aux dessins annexés, sur lesquels :
- la Fig.1 représente une vue en coupe d'un dispositif de liaison selon l'invention;
- les Fig.2 et 3 illustrent les étapes d'emmanchement à force de la clef sur l'arbre de direction; et
- la Fig.4 représente une vue en coupe d'une variante de réalisation du dispositif de liaison selon l'invention.

Ainsi qu'on peut le voir sur ces figures, un dispositif de liaison d'un arbre désigné par la référence générale 1 sur ces figures, notamment de direction de véhicule automobile et d'une fourche de cardan désignée par la référence générale 2 sur ces figures, est du type dans lequel la fourche de cardan comporte un corps tubulaire 3 à l'une des extrémités duquel sont formées des branches de réception de moyens d'articulation à la cardan. Ces branches sont désignées par les références générales 4 et 5, tandis que les moyens d'articulation à la cardan sont désignés par la référence générale 6.

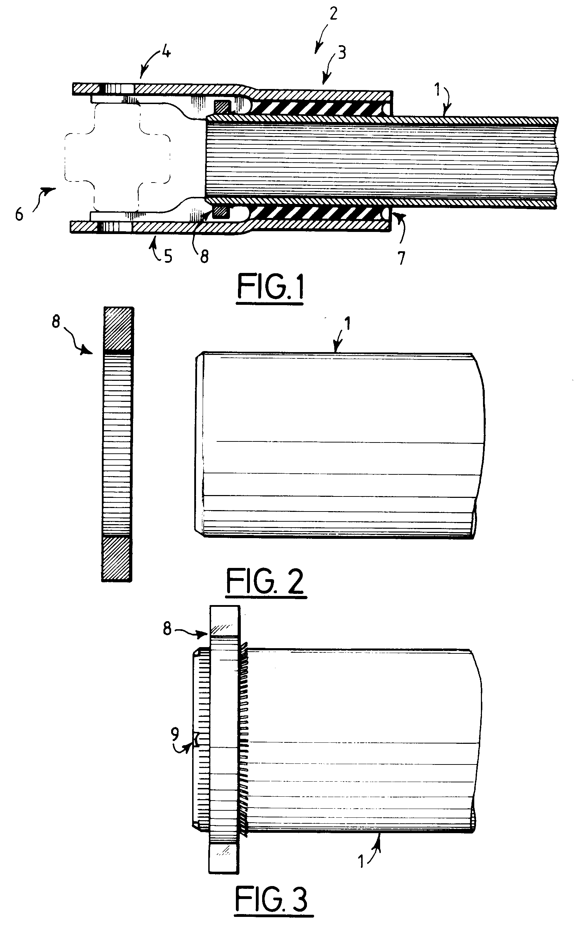

Un organe de filtrage de vibrations par exemple en matière élastiquement déformable est désigné par la référence 7 sur la figure 1 et est disposé entre le corps 3 de la fourche de cardan et une portion correspondante de l'arbre de direction 1.

Avantageusement, cet organe de filtrage de vibrations est monté sous contrainte entre ce corps et cette portion d'arbre et est fixé sur ceux-ci.

Pour des questions de sécurité de la liaison entre l'arbre et la fourche de cardan, on utilise des moyens de limitation du déplacement angulaire du corps et de l'arbre l'un par rapport à l'autre.

Ces moyens sont désignés par la référence générale 8 sur cette figure 1 et se présentent par exemple sous la forme d'une clef de verrouillage constituée par une rondelle fixée sur l'arbre et comprenant sur sa surface externe des parties en saillie radiale adaptées pour coopérer avec des surfaces de butée complémentaires du corps comme cela est connu.

Ainsi qu'on l'a mentionné précédemment, différents modes de fixation de cette clef de sécurité sur l'arbre ont été envisagés.

Pour résoudre les problèmes de coût mentionnés à propos de ces dispositifs de l'état de la technique, dans le dispositif de liaison selon l'invention, l'arbre et la clef de sécurité sont réalisés en des matériaux présentant des duretés différentes.

L'organe, clef ou arbre, réalisé dans le matériau le plus dur comporte des parties en saillie et en creux d'immobilisation par rapport à l'autre organe, le diamètre interne de la clef étant inférieur au diamètre externe de l'arbre et la clef est fixée sur l'arbre par emmanchement à force.

Avantageusement, les parties en saillie et en creux de l'organe réalisé dans le matériau le plus dur, sont formées par des cannelures de celui-ci.

Avantageusement également, l'organe réalisé dans le matériau le plus dur est la clef.

On conçoit alors que ceci présente un certain nombre d'avantages par rapport aux dispositifs de liaison de l'état de la technique.

En effet, seul l'organe réalisé dans le matériau le plus dur comporte des cannelures préformées, tandis que les cannelures complémentaires de l'autre organe sont obtenues lors de l'emmanchement à force de ces deux organes l'un dans l'autre, ce qui permet de supprimer les opérations de formation de cannelures sur cet autre organe.

Par ailleurs, ceci permet également de former sur l'arbre, une butée axiale pour la clef par reflux de matière de l'arbre lors de cet emmanchement à force, comme on peut le voir sur les figures 2 et 3.

Il suffit alors de réaliser des points de sertissage, par exemple 9, à l'extrémité de l'arbre pour obtenir une fixation extrêmement fiable de cette clef sur l'arbre.

Ceci permet par ailleurs de résoudre un certain nombre de problèmes par exemple de tolérances d'assemblage des pièces dans la mesure où le serrage de la clef sur l'arbre se fait automatiquement lors de l'emmanchement à force. Il n'est pas nécessaire de réaliser de positionnement angulaire prédéterminé de la clef par rapport à l'arbre lors de l'emmanchement dans la mesure où les cannelures complémentaires d'immobilisation de la clef par rapport à l'arbre sont réalisées lors de l'opération d'emmanchement à force.

Bien entendu, des parties en saillie et en creux d'immobilisation autres que des cannelures peuvent être envisagées entre la clef et l'arbre.

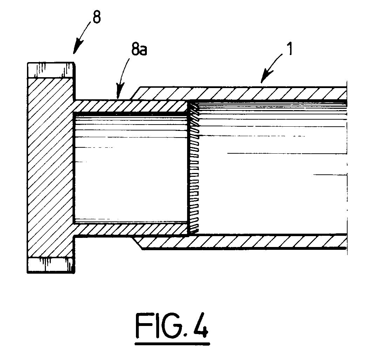

Selon la variante de réalisation représentée sur la figure 4, la clef 8 comporte un moyeu 8a adapté pour être emmanché à force dans l'extrémité correspondante de l'arbre 1, cet emmanchement étant réalisé de manière analogue à ce qui a été décrit précédemment.

Dans cette variante, la clef forme également un bouchon d'obturation de l'extrémité de l'arbre.

Dans cette variante également, le diamètre externe du moyeu de la clef est supérieur au diamètre interne de l'arbre.

On conçoit que dans ce cas également, l'arbre et la clef sont réalisés dans des matériaux présentant des duretés différentes et que l'organe réalisé dans le matériau le plus dur comporte des parties en saillie et en creux d'immobilisation par rapport à l'autre organe, adaptées pour former dans l'autre organe, lors de l'emmanchement, des parties de formes complémentaires d'immobilisation.

De même, la clef de sécurité peut également être emmanchée à force de la façon indiquée précédemment dans le corps de la fourche, cette clef comportant alors des parties en saillie radiales s'étendant en direction de l'arbre et adaptées pour coopérer avec des surfaces de butée complémentaires de cet arbre.

Le diamètre externe de la clef est alors supérieur au diamètre interne du corps de la fourche pour permettre la formation des cannelures complémentaires d'immobilisation lors de l'emmanchement à force de ces éléments l'un dans l'autre.

## Revendications

1. Dispositif de liaison d'un arbre notamment de direction d'un véhicule automobile et d'une fourche de cardan comportant un corps tubulaire (3) à l'une des extrémités duquel sont formées des branches (4,5) de réception de moyens d'articulation à la cardan (6), le dispositif comportant un organe de filtrage de vibrations (7) en matière élastiquement déformable, disposé entre le corps (3) et une portion correspondante de l'arbre (1) et une clef de sécurité de limitation du déplacement angulaire du corps et de l'arbre l'un par rapport à l'autre, fixée à l'un des éléments, arbre ou corps, par emmanchement et comprenant au moins une partie en saillie radiale adaptée pour coopérer avec des surfaces de butée complémentaires de l'autre des éléments, corps ou arbre, caractérisé en ce que l'élément correspondant et la clef de sécurité (8) sont réalisés en des matériaux présentant des duretés différentes, en ce que l'organe, clef (8) ou élément correspondant, réalisé dans le matériau le plus dur comporte des parties en saillie et en creux d'immobilisation par rapport à l'autre organe, et en ce que la clef (8) est fixée à l'élément correspondant par emmanchement à force.

2. Dispositif selon la revendication 1, caractérisé en ce que les parties en saillie et en creux d'immobilisation sont formées par des cannelures.

3. Dispositif selon la revendication 1 ou 2, caractérisé en ce que l'organe réalisé dans le matériau le plus dur est la clef de sécurité (8).

4. Dispositif selon l'une quelconque des revendications précédentes, caractérisé en ce que, après l'emmanchement de la clef, celle-ci est sertie sur l'élément correspondant.

5. Dispositif selon l'une quelconque des revendications précédentes, caractérisé en ce que la clef est emmanchée à force sur l'arbre et en ce que le diamètre interne de la clef est inférieur au diamètre externe de l'arbre.

6. Dispositif selon l'une quelconque des revendictions 1 à 4, caractérisé en ce que la clef (8) comporte un moyeu (8a) adapté pour être emmanché à force dans l'arbre de direction et en ce que le diamètre externe du moyeu de la clef est supérieur au diamètre interne de l'arbre.

7. Dispositif selon l'une quelconque des revendications 1 à 4, caractérisé en ce que la clef (8) est emmanchée à force dans le corps (3) de la fourche et en ce que le diamètre externe de la clef est supérieur au diamètre interne du corps.
